**Europäisches Patentamt**

**European Patent Office**

**Office européen des brevets**

(19)

(11) Numéro de publication : **0 099 773 B2**

(12) **NOUVEAU FASCICULE DE BREVET EUROPEEN**

(45) Date de publication du nouveau fascicule du brevet : **03.03.93 Bulletin 93/09**

(51) Int. Cl.$^5$ : **C08F 10/00, C08F 4/64**

(21) Numéro de dépôt : **83401222.1**

(22) Date de dépôt : **14.06.83**

(54) **Catalyseurs pour la polymérisation et la copolymérisation du propylène et procédés de polymérisation utilisant ces catalyseurs.**

Le dossier contient des informations techniques présentées postérieurement au dépôt de la demande et ne figurant pas dans le présent fascicule.

(30) Priorité : **24.06.82 FR 8211056**

(43) Date de publication de la demande : **01.02.84 Bulletin 84/05**

(45) Mention de la délivrance du brevet : **29.01.86 Bulletin 86/05**

(45) Mention de la décision concernant l'opposition : **03.03.93 Bulletin 93/09**

(84) Etats contractants désignés : **AT BE DE FR GB IT NL SE**

(56) Documents cités :
**EP-A- 0 024 933**
**EP-A- 0 098 196**
**DE-A- 1 957 705**

(56) Documents cités :
**DE-A- 3 012 272**
**DE-A- 3 012 276**
**FR-A- 2 014 887**
**FR-A- 2 143 346**
**FR-A- 2 453 183**
**FR-A- 2 453 184**
**GB-A- 1 434 543**
**GB-A- 1 550 195**
**GB-A- 1 580 635**
**F.J. Karol et al.: Catalysis and the Unipol Process for Ethylene Polimerization. Bound Brook, N.J. (Union Carbide Corporation), 1985**

(73) Titulaire : **BP Chimie Société Anonyme Tour Neptune - La Défense 1 20, place de Seine F-92400 Courbevoie (FR)**

(72) Inventeur : **Bailly, Jean Claude Les Platanes, rue E. Amavet F-13500 Martigues (FR)**

(74) Mandataire : **Patentanwälte Beetz sen. - Beetz jun. Timpe - Siegfried - Schmitt-Fumian Steinsdorfstrasse 10 W-8000 München 22 (DE)**

EP 0 099 773 B2

EP 0 099 773 B2

## Description

La présente invention concerne de nouveaux catalyseurs pour la polymérisation et la copolymérisation du propylène et les procédés utilisant ces catalyseurs.

On sait que les catalyseurs de polymérisation et de copolymérisation des $\alpha$-oléfines, catalyseurs dits « Ziegler-Natta », sont obtenus par la combinaison de composés métalliques de transition appartenant aux groupes IV, V ou VI de la classification périodique des éléments, avec au moins un composé organo-métallique des groupes I à III de cette classification.

On sait par ailleurs que les propriétés de ces catalyseurs peuvent être fortement influencées lorsque ledit composé métallique de transition est utilisé avec un composé minéral solide qui peut être coprécipité avec ledit composé métallique de transition ou qui est utilisé comme support dudit composé métallique de transition.

Comme composé minéral utilisé avantageusement comme support on peut mentionner, par exemple, les oxydes de magnésium et de titane, le silicate d'aluminium, le carbonate de magnésium et le chlorure de magnésium.

Dans cette technique de catalyseur supporté, les propriétés du support, d'une part, et le procédé de préparation du catalyseur (dépôt du composé métallique de transition), d'autre part, ont une importance très grande sur les propriétés dudit catalyseur.

La présente invention concerne un catalyseur supporté, le support étant constitué essentiellement de chlorure de magnésium ayant des propriétés spécifiques, et le catalyseur comprenant du tétrachlorure de titane, connu pour ses propriétés catalytiques dans la polymérisation et la copolymérisation des $\alpha$-oléfines.

Le support du catalyseur est constitué de particules à base essentiellement de chlorure de magnésium, qui présentent les caractéristiques suivantes :

- les particules ont une forme sphéroïdale définie par le fait, que si D et d sont respectivement le grand et le petit axe de ces particules, $D/d \leqq 1,3$;
- les particules ont un diamètre moyen en masse compris entre 10 et 100 $\mu$m environ;
- la distribution granulométrique de ces particules est telle que le rapport Dm/Dn du diamètre moyen en masse, Dm, au diamètre moyen en nombre, Dn, est inférieur où égal à 3, notamment, compris entre 1,1 et 2,5; plus particulièrement, la distribution granulométrique de ces particules est très étroite et telle que le rapport Dm/Dn est compris entre 1,1 et 1,5; on note en outre l'absence pratiquement totale de particules de diamètre supérieur à 2 x Dm ou inférieur à 0,2 x Dm; la distribution granulométrique peut, en outre, être telle que plus de 90% en poids des particules d'un même lot sont compris dans la fourchette Dm $\pm$ 10%;
- les particules peuvent présenter une surface légérement bosselée telle que celle d'une framboise mais présentent, de préférence, une surface très lisse;
- la surface spécifique des particules est comprise entre 20 et 60 $m^2/g$ (BET);
- la densité des particules est comprise entre environ 1,2 et 2,1;
- les particules sont constituées essentiellement de chlorure de magnésium et éventuellement d'un chlorure d'aluminium; le rapport atomique Cl/(Mg + 3/2 Al) est sensiblement égal à 2; en outre les particules ne contiennent pas de produits comportant des liaisons Mg-C mais contiennent un composé donneur d'électrons en faible proportion.

Les supports ainsi définis peuvent notamment être préparés en faisant réagir un composé organomagnésien avec un composé organique chloré, en présence d'un composé donneur d'électrons. Comme composé organomagnésien, on peut choisir soit un produit de formule $R_1MgR_2$, soit un complexe d'addition de formule $R_1MgR_2,xAl(R_3)_3$, formules dans lesquelles $R_1$, $R_2$ et $R_3$ sont des radicaux alcoyles identiques ou différents ayant de 2 à 12 atomes de carbone et x est compris entre 0,001 et 10, et de préférence compris entre 0,01 et 2. Comme composé organique chloré, on choisit un chlorure d'alcoyle de formule $R_4$ Cl dans laquelle $R_4$ est un radical alcoyle secondaire ou de préférence tertiaire ayant de 3 à 12 atomes de carbone. Le composé donneur d'électrons utilisé est un composé organique choisi parmi les amines, les amides, les phosphines, les sulfoxydes, les sulfones ou les éthers. Parmi les composés donneurs d'électrons, on peut choisir notamment un éther aliphatique de formule $R_5OR_6$, dans laquelle $R_6$ et $R_6$ sont des radicaux alcoyle identiques ou différents ayant de 1 à 12 atomes de carbone.

De plus, les divers réactifs mis en jeu pour la préparation des supports tels que définis précédememnt doivent être utilisés dans les conditions suivantes:

- le rapport molaire $R_4Cl/R_1MgR_2$ est compris entre 1,5 et 2,5 et, de préférence, compris entre 1,95 et 2,2;
- le rapport molaire $R_4Cl/R_1MgR_2$, $xAl(R_3)_3$ est compris entre 1,5 (1+3/2 x) et 2,5 (1+3/2 x), et de préférence entre 1,95 (1+3/2 x) et 2,2 (1+3/2 x);
- le rapport molaire entre le composé donneur d'électrons et le composé organomagnésien ($R_1MgR_2$ ou $R_1MgR_2,xAl(R_2)_3$) est compris entre 0,01 et 2, et de préférence compris entre 0,01 et 1;
- la réaction entre le composé organomagnésien et le composé organique chloré a lieu sous agitation, au

2

sein d'un hydrocarbure liquide, à une température comprise entre 5 et 80°C, et en particulier entre 35 et 80°C.

La préparation des catalyseurs à partir des supports ainsi définis comporte deux étapes, à savoir:

a) un traitement dudit support a l'aide d'un composé donneur d'électrons du type ester d'un acide aromatique ou du type éther aromatique,

b) une imprégnation du support ainsi traité à l'aide de tétrachlorure de titane.

Dans la première étape, la quantité de composé donneur d'électrons à utiliser est comprise entre 0,06 et 0,2 mol de composé donneur d'électrons par mole de $MgCl_2$ du support, et la température à utiliser est comprise entre 20 et 50°C environ.

Dans la deuxième étape, le support est imprégné par du tétrachlorure de titane qui peut être utilisé pur ou en solution dans un hydrocarbure liquide: les quantités de $TiCl_4$ doivent être suffisantes pour pouvoir fixer sur le support de 0,5 à 3% d'atomes de titane par atome de magnésium présent dans le support; la température d'imprégnation est comprise entre environ 80 et 100° C. Le catalyseur obtenu est ensuite lavé plusieurs fois avec un hydrocarbure liquide.

Les catalyseurs préparés selon la présente invention sont constitués de particules dont les propriétés physiques telles que la forme sphéroïdale, l'aspect de surface, le diamètre moyen en masse et la distribution granulométrique définie par le rapport Dm/Dn, sont sensiblement identiques à celles des particules du support de chlorure de magnésium dont elles sont issues.

Selon une technique connue, ces catalyseurs sont utilisés dans la polymérisation des $\alpha$-oléfines en association avec un cocatalyseur. Cette association de catalyseur et du cocatalyseur constitue ce que l'on appelle le « complexe catalytique ».

Le cocatalyseur est généralement un composé organoaluminique de formule $Al(R_7)_3$, dans laquelle $R_7$ est un radical alcoyle ayant de 2 à 12 atomes de carbone; il est, de préférence, utilisé à l'état complexé avec un composé donneur d'électrons par exemple de type ester d'acide aromatique. Le rapport molaire entre ce composé donneur d'électrons et le composé organoaluminique est compris entre 0,1 et 0,5 et est de préférence, égal à environ 0,3. Une quantité insuffisante de ce composé donneur d'électrons diminue la stéréospécificité du « complexe catalytique » et une quantité trop importante de ce composé donneur d'électrons affaiblit l'activité du « complexe catalytique ».

Les quantités relatives molaires du composé organoaluminique par rapport au composé du titane utilisé peuvent varier dans un très large domaine; par exemple, le rapport atomique Al/Ti peut varier entre 1 et 200.

Le « complexe catalytique » peut être préparé par simple mélange de catalyseur et du cocatalyseur. Il peut être utilisé dans la polymérisation en suspension dans un hydrocarbure liquide ou dans le monomère liquide; il est cependant possible, notamment si l'on souhaite utiliser ledit « complexe catalytique » dans une polymérisation ou copolymérisation à sec, de réaliser un enrobage dudit « complexe catalytique » par prépolymérisation. Cette prépolymérisation doit être effectuée en suspension dans un milieu d'hydrocarbure liquide jusqu'à ce que le produit obtenu comporte de 0,1 à 10 g de polymère ou de copolymère par millimole de titane; elle peut ensuite être poursuivie, soit en suspension dans un milieu d'hydrocarbure liquide, soit à sec, jusqu'à ce que le prépolymère obtenu contienne environ de 10 à 500 g de polymère ou de copolymère par millimole gramme de titane.

Il est important de noter qu'en utilisant les supports et les catalyseurs tels que décrits ci-dessus, le développement de chaque particule au cours de la prépolymérisation et, ensuite, au cours de la polymérisation ou de la copolymérisation est parfaitement régulier, de telle sorte que l'on obtient des poudres de polymères ou de copolymères dont les dimensions sont homothétiques de celles des particules du catalyseur et du support.

*Méthode de détermination des diamètres moyens en masse (Dm) et en nombre (Dn) des particules de support de chlorure de magnésium ou de catalyseur*

Selon l'invention, les diamètres moyens en masse (Dm) et en nombre (Dn) des particules de support de chlorure de magnésium ou de catalyseur sont mesurés à partir d'observations microsropiques, au moyen de l'analyseur d'images Optomax (Micro-Measurements Ltd, Grande-Bretagne). Le principe de la mesure consiste à obtenir à partir de l'étude expérimentale par microscopie optique d'une population de particules une table d'effectifs où est donné le nombre $(n_i)$ de particules appartenant à chaque classe (i) de diamètres, chaque classe (i) étant caractérisée par un diamètre intermédiaire $(d_i)$, compris entre les limites de ladite classe. Suivant la norme française homologuée NF X 11-630 de juin 1981, Dm et Dn sont fournis par les formules suivantes:

- diamètre moyen en masse:

$$Dm = \frac{\Sigma\, ni\, (di)^3 \cdot di}{\Sigma\, ni\, (di)^3}$$

- diamètre moyen en nombre:

$$Dn = \frac{\Sigma\ ni \cdot di}{\Sigma\ ni}$$

Le rapport Dm/Dn caractérise la distribution granulométrique; il est parfois appelé « largeur de distribution granulométrique ».

La mesure par l'analyseur d'images Optomax est réalisée au moyen d'un microscope inversé qui permet l'examen des suspensions de particules de chlorure de magnésium ou de catalyseurs avec un grossissement compris entre 16 et 200 fois. Une caméra de télévision reprend les images données par le microscope inversé et les transmet à un ordinateur qui analyse les images ligne par ligne et point par point sur chaque ligne, en vue de déterminer les dimensions ou diamètres des particules, puis de les classer.

Les exemples non limitatifs suivants illustrent l'invention.

*Exemple 1:*

*1.1. Préparation du support*

Dans un réacteur en verre, ayant une capacité de 1 l, muni d'un système d'agitation tournant à 750 min$^{-1}$, on introduit à température ambiante et sous azote 550 ml d'une solution de dibutyle magnésium dans le n-hexane contenant 500 mmol de magnésium et 51 ml d'éther diisoamylique (250 mmol).

Le réacteur est alors chauffé à 50° C et on y verse, goutte à goutte en 2 h, 115 ml de chlorure de tertiobutyle (1050 mmol). A la fin de cette addition, on maintient la suspension à 50°C pendant 2 h et on lave le précipité obtenu à cette même température avec du n-hexane.

Le support ainsi formé contient par mole de magnésium: 2,0 mol de chlore et 0,011 mol d'éther diisoamylique.

A l'examen microscopique, le support se présente sous forme de particules sphéroïdiques (le rapport D/d entre le grand et petit axe des particules est en moyenne égal à 1,2) ayant une distribution granulométrique telle que Dm/Dn = 1,2 avec Dm = 38$\mu$m; on trouve que plus de 90% en poids des particules ont un diamètre moyen compris entre 34 et 42 $\mu$m ces particules présentent une surface lisse, une surface spécifique égale à 42 m$^2$/g (BET) et une densité égale à 1,3.

*1.2. Préparation du catalyseur*

Dans un réacteur en verre, ayant une capacité de 1 l et muni d'un système d'agitation tournant à 250 min$^{-1}$, on introduit sous azote 500 ml d'une suspension dans le n-hexane du support préparé à l'exemple 1.1, cette suspension contenant 0,2 mol de magnésium. Après décantation, on soutire la phase hydrocarbonée surnageante. Le réacteur est alors chauffé à 50°C et on y introduit 2 ml de benzoate d'éthyle (14 mmol). On maintient la suspension sous agitation pendant 2 h, puis on introduit 2 mol de tétrachlorure de titane pur (220 ml). On élève la température à 80° C et on maintient cette température pendant 2 h. Le solide obtenu est ensuite lavé avec du n-hexane à 50°C pour donner le catalyseur prêt à l'emploi, sous forme d'une suspension dans le n-hexane.

L'analyse du catalyseur montre qu'il contient, par mole de magnésium: 2,05 mol de chlore, 0,014 mol de titane, 0,016 mol de benzoate d'éthyle et qu'il ne contient aucune trace d'éther diisoamylique.

Le catalyseur ainsi défini est une poudre de couleur jaune grisâtre, constituée de particules de forme sphéroïdale, ayant une distribution granulométrique telle que Dm/Dn = 1,2 avec Dm= 38 $\mu$m; on trouve, en outre, que plus de 90% en poids des particules ont un diamètre moyen compris entre Dm ± 10%; ces particules présentent une surface aussi lisse que celle du support initial.

*Exemple 2:*

*2.1. Préparation du support*

La préparation du support est identique à celle de l'exemple 1, excepté le fait qu'on utilise 56 ml (275 mmol) d'éther diisoamylique, au lieu de 51 ml (250 mmol), et 120 ml (1100 mmol) de chlorure de tertiobutyle, au lieu de 115 ml (1050 mmol), c'est-à-dire que l'on utilise 0,55 mol d'éther diisoamylique et 2,2 mol de chlorure de tertiobutyle par mole de dibutyle magnésien.

Le support ainsi obtenu contient, par mol de magnésien: 2,0 mol de chlore et 0,015 mol d'éther diisoamylique.

A l'examen microscopique, le support se présente sous forme de particules sphéroïdiques, de distribution granulométrique telle que Dm/Dn = 1,3 avec Dm = 40; µm on trouve que plus de 90% en poids des particules ont un diamètre moyen compris entre 36 et 44 µm; ces particules présentent une surface lisse.

*2.2 Préparation du catalyseur*

Dans un réacteur en verre, ayant une capacité de 1 l et muni d'un système d'agitation tournant à 250 min$^{-1}$, on introduit, sous azote, 500 ml d'une suspension dans le n-hexane, de support préparé à l'exemple 2, contenant 200 mmol de magnésium. Après décantation, on soutire la phase hydrocarbonée surnageante. Le réacteur est alors chauffé à 50°C et on y introduit 3 ml de benzoate d'éthyle (21 mmol). On maintient la suspension sous agitation pendant 1 h, puis on élève la température à 80°C pour éliminer le n-hexane à l'aide d'un courant d'azote. On introduit alors dans le réacteur 3 mol de TiCl$_4$ pur (330 ml) et on maintient le mélange sous agitation pendant 2 h à 80°C. Le catalyseur obtenu est lavé avec du n-hexane à 50°C pour donner le catalyseur prêt à l'emploi sous forme d'une suspension dans le n-hexane.

L'analyse du catalyseur ainsi obtenu montre qu'il contient, par mole de magnésium: 2,05 mol de chlore, 0,030 mol de benzoate d'éthyle, 0,020 mol de titane, et qu'il ne contient aucune trace d'éther diisoamylique.

Le catalyseur ainsi défini est une poudre constituée de particules sphéroïdiques, ayant une distribution granulométrique, telle que Dm/Dn = 1,3 avec Dm = 40 µm; on trouve que plus de 90% en poids des particules ont un diamètre moyen compris entre 36 et 44 µm; ces particules présentent une surface aussi lisse que celle du support initial.

*Exemple 3:*

On utilise dans cet exemple, comme support, une poudre à base de chlorure de magnésium, constituée de particules sphéroïdiques ayant une distribution granulométrique telle que Dm/DN = 1,1, avec Dm = 20 µm; cette poudre présente plus de 90% en poids des particules qui ont un diamètre moyen compris entre 18 et 22 µm.

*Préparation du catalyseur*

La préparation du catalyseur est identique à celle de l'exemple 1. On obtient un catalyseur solide prêt à l'emploi, sous forme d'une suspension dans le n-hexane. L'analyse chimique de ce catalyseur montre qu'il contient, par mole de magnésium, 2,00 mol de chlore, 0,014 mol de titane, 0,016 mol de benzoate d'éthyle et qu'il ne contient aucune trace d'éther diisoamylique.

Ce catalyseur est constitué de particules sphéroïdiques, ayant une distribution granulométrique telle que Dm/Dn = 1,1 avec Dm = 20 µm; on trouve, en outre, que plus de 90% en poids des particules ont un diamètre moyen compris entre 18 et 22 µm; ces particules présentent une surface d'aspect identique à celle du support initial.

*Exemple 4:*

On utilise, comme support, une poudre à base de chlorure de magnésium, constituée de particules sphéroïdiques ayant une distribution granulométrique étroite, telle que Dm/Dn = 1,5, avec Dm = 30 µm; elle présente une densité égale à 1,9 et une surface spécifique égale à 46 m$^2$/g (BET); la surface des particules est très lisse.

*Préparation du catalyseur*

La préparation du catalyseur est identique à celle de l'exemple 1. On obtient un catalyseur solide prêt à l'emploi, sous forme d'une suspension dans le n-hexane. L'analyse chimique de ce catalyseur montre qu'il contient, par mole de magnésium, 2,00 mol de chlore, 0,015 mol de titane, 0,018 mol de benzoate d'éthyle et qu'il ne contient aucune trace d'éther diisoamylique.

Ce catalyseur est constitué de particules sphéroïdiques, ayant une distribution granulométrique telle que Dm/Dn= 1,5 avec Dm = 30 µm; ces particules ont une surface aussi lisse que celle du support initial.

*Exemple 5:*

On utilise comme support une poudre de base de chlorure de magnésium constituée de particules sphéroïdiques ayant une'distribution granulométrique étroite telle que Dm/Dn = 2,5 avec Dm = 35 µm; cette poudre contient moins de 0,05% en poids de particules de diamètre inférieur à 7 μm; elle présente une densité égale à 1,8 en une surface spécifique égale à 44 m$^2$/g (BET); la surface des particules est lisse.

*Préparation du catalyseur*

La préparation du catalyseur est identique à celle de l'exemple 1. On obtient un catalyseur solide prêt à l'emploi, sous forme d'une suspension dans le n-hexane. L'analyse chimique de ce catalyseur montre qu'il contient, par mole de magnésium, 2,05 mol de chlore, 0,018 mol de titane, 0,018 mol de benzoate d'éthyle et qu'il ne contient aucune trace d'éther diisoamylique.

Ce catalyseur est constitué de particules sphéroïdiques ayant une distribution granulométrique telle que Dm/Dn = 2,5 avec Dm = 35 μm; ces particules ont une surface aussi lisse que celle du support initial.

*Exemple 6:*

*Polymérisation en suspension*

Dans un réacteur en acier inoxydable, ayant une capacité de 5l et muni d'un système d'agitation tournant à 750 min$^{-1}$, on introduit, sous couverture d'azote, 2 l de n-hexane chauffé à 50°C, 10 mmol de triisobutylaluminium (TiBA), 3,7 mmol de paratoluate de méthyle et une quantité du catalyseur préparé à l'exemple 1, correspondant à 0,08 mol de titane. On chauffe le réacteur à 60°C et on y introduit un volume de 40 ml d'hydrogène mesuré dans les conditions normales, puis le propylène suivant un débit de 300 g/h pendant 2 h. Au bout de 1 h d'introduction du propylène, on ajoute dans le réacteur un volume supplémentaire de 40 ml d'hydrogène mesuré dans les conditions normales. A la fin de d'introduction du propylène, on maintient la suspension de polypropylène sous agitation et à 60°C pendant encore ½ h. Puis, le propylène non polymérisé est dégazé, et le n-hexane est évaporé de la suspension de polypropylène. On obtient 480 g d'une poudre sèche de polypropylène ayant les caractéristiques suivantes:
- teneur en titane: 8 ppm (correspondant à un rendement en polymérisation de 6 kg/mmole gramme de titane du catalyseur),
- masse volumique apparente (MVA): 0,41 g/cm$^3$,
- teneur en polymère insoluble dans le n-heptane bouillant: 92% en poids,
- indice de fluidité (IF$_5$) sous 5 kg à 190°C: 1,8 g/10 min,
- diamètre moyen en masse (Dm) : 250 μm,
- poudre constituée de particules de forme sphéroïdale, de distribution granulométrique étroite et de surface lisse.

*Exemple 7:*

*Polymérisation en suspension*

On procède exactement comme à l'exemple 6, excepté le fait qu'on utilise le catalyseur préparé à l'exemple 2, au lieu du catalyseur préparé à l'exemple 1. On obtient 410 g d'une poudre sèche de polypropylène dont les caractéristiques sont décrites dans le tableau 1.

*Exemple 8:*

*Polymérisation en suspension*

On procède exactement comme à l'exemple 6, excepté le fait qu'on utilise le catalyseur préparé à l'exemple 3. On obtient 395 g d'une poudre sèche de polypropylène dont les caractéristiques sont décrites dans le tableau 1.

*Exemple 9:*

*Polymérisation en suspension*

On procède exactement comme à l'exemple 6, excepté le fait qu'on utilise 5 mmol de paratoluate de méthyle, au lieu de 3,7 mmol, et une quantité du catalyseur préparé à l'exemple 1, correspondant à 0,135 mmol de titane, au lieu de 0,08 mmol de titane. On obtient 430 g d'une poudre sèche de polypropylène dont les caractéristiques sont décrites dans le tableau 1.

*Exemple 10:*

*Polymérisation en suspension*

On procède exactement comme à l'exemple 6, excepté le fait qu'on utilise 2,5 mmol de paratoluate de méthyle, au lieu de 3,7 mmol, et une quantité du catalyseur préparé à l'exemple 1, correspondant à 0,135 mmol de titane au lieu de 0,08. On obtient 600 g de poudre séché de polypropylène dont les caractéristiques sont décrites dans le tableau 1.

*Exemple 11 :*

*Polymérisation en suspension*

On procède exactement comme à l'exemple 6, excepté le fait qu'on utilise 10 mmol de triéthylaluminium (TEA), au lieu de 10 mmol de TiBA, et 3,3 mmol de paratoluate de méthyle, au lieu de 3,7 mmol. On obtient 500 g d'une poudre sèche de polypropylène dont les caractéristiques sont décrites dans le tableau 1.

*Exemple 12:*

*Polymérisation en suspension*

On procède exactement comme à l'exemple 6, excepté le fait qu'on utilise 10 mmol de tr-n-octylaluminium (TnOA), au lieu de 10 mmol de TiBA, 4 mmol de paratoluate de méthyle, au lieu de 3,7 mmol, et une quantité du catalyseur préparé à l'exemple 1, correspondant à 0,1 mmol de titane, au lieu de 0,08 mmol. On obtient 450 g d'une poudre sèche de polypropylène dont les caractéristiques sont décrites dans le tableau 1.

*Exemple 13:*

*Copolymérisation séquencée en suspension*

On procède exactement comme à l'exemple 6, excepté le fait qu'on introduit dans le réacteur du propylène suivant un débit de 300 g/h pendant 1 ½ h, au lieu de 2 h, et qu'au bout de ce temps, on dégaze le réacteur jusqu'à 0,1 MPa et qu'on introduit un mélange d'éthylène et de propylène contenant 80% d'éthylène en poids, suivant un débit de 200 g/h pendant ½ h. Au bout de ce temps, on maintient la suspension de copolymère sous agitation et à 60°C, pendant encore ½ h. On obtient 450 g d'une poudre sèche d'un copolymère séquencé d'éthylène et de propylène qui possède une teneur en motifs dérivés de l'éthylène égale à 9% en poids (mesurée par spectrographie infrarouge ) et dont les autres caractéristiques sont décrites dans le tableau 1.

*Exemple 14:*

*Copolymérisation statistique en suspension*

On procède exactement comme à l'exemple 6, excepté le fait qu'on introduit dans le réacteur un mélange de propylène et d'éthylène contenant 5% d'éthylène en poids, au lieu du propylène seul. On obtient 400 g d'une poudre sèche d'un copolymère statistique du propylène et de l'éthylène, qui possède une teneur en motifs dérivés de l'éthylène égale à 5% en poids (mesurée par spectrographie infrarouge) et dont les autres caractéristiques sont décrites dans le tableau 1.

*Exemple 15:*

*Polymérisation en suspension*

On procède exactement comme à l'exemple 6, excepté le fait qu'on utilise le catalyseur préparé à l'exemple 4. On obtient 460 g d'une poudre sèche de polypropylène dont les caractéristiques sont décrites dans le tableau 1.

*Exemple 16:*

*Polymérisation en suspension*

On procède exactement comme à l'exemple 6, excepté le fait qu'on utilise le catalyseur préparé à l'exemple 5. On obtient 500 g d'une poudre sèche de polypropylène dont les caractéristiques sont décrites dans le tableau 1.

*Exemple 17:*

*Polymérisation dans le propylène liquide*

Dans un réacteur en acier inoxydable, d'une capacité de 5 l et muni d'un système d'agitation tournant à 750 min$^{-1}$, on introduit, sous couverture d'azote, 10 mmol de TiBA, 3,7 mmol de paratoluate de méthyle et une quantité de catalyseur préparé à l'exemple 1, correspondant à 0,1 mmol de titane.

On purge le réacteur avec du propylène gazeux et on y introduit 1,5 kg de propylène liquide et un volume de 200 ml d'hydrogène mesuré dans les conditions normales. On chauffe alors le réacteur à 60°C et la réaction de polymérisation dure 1 $\frac{1}{2}$ h. Au bout de ce temps, on dégaze l'excès de propylène non polymérisé et on récupère, après entraînement à la vapeur, 600 g d'une poudre sèche de polypropylène ayant les caractéristiques suivantes:
- teneur en titane: 8 ppm,
- masse volumique apparente (MVA): 0,49 g/cm$^3$,
- teneur en polymère insoluble dans le n-heptane bouillant: 92% en poids,
- indice de fluidité (IF$_5$) sous 5 kg à 190°C: 2,3g/10 min,
- diamètre moyen en masse (Dm): 250 $\mu$m,
- poudre constituée de particules de forme sphéroïdale, de distribution granulométrique étroite et de surface lisse.

*Exemple 18:*

*Polymérisation dans le propylène liquide*

On procède exactement comme à l'exemple 17, excepté le fait qu'on introduit dans le réacteur une quantité du catalyseur préparé à l'exemple 2, correspondant à 0,08 mmol de titane, au lieu d'une quantité du catalyseur préparé à l'exemple 1, correspondant à 0,1 mmol de titane, et un volume de 400 ml d'hydrogène mesuré dans les conditions normales, au lieu de 200 ml, et que la réaction de polymérisation du propylène dure 2 h, au lieu de 1$\frac{1}{2}$ h. On obtient 650 g d'une poudre sèche de polypropylène, ayant les caractéristiques suivantes:
- teneur en titane: 6 ppm,
- masse volumique apparente (MVA): 0,48 g/cm$^3$,
- teneur en polymère insoluble dans le n-heptane bouillant: 91 % en poids,
- indice de fluidité (IF$_5$) sous 5 kg à 190°C: 3,9 g/10 min,
- diamètre moyen en masse (Dm): 280 $\mu$m,
- poudre constituée de particules de forme sphéroïdale, de distribution granulométrique étroite et de surface lisse.

*Exemple 19*:

*Polymérisation dans le propylène liquide*

On procède exactement comme à l'exemple 17, excepté le fait qu'on introduit dans le réacteur une quantité du catalyseur préparé à l'exemple 3, correspondant à 0,05 mmol de titane, au lieu d'une quantité du catalyseur préparé à l'exemple 1 correspondant à 0,1 mmol de titane, et que la réaction de polymérisation du propylène dure 2 h au lieu de 1$\frac{1}{2}$ h. On obtient 450 g d'une poudre sèche de polypropylène, ayant les caractéristiques suivantes:
- teneur en titane: 5 ppm,
- masse volumique apparente (MVA): 0,50 g/cm$^3$,
- teneur en polymère insoluble dans le n-heptane bouillant: 91% en poids,
- indice de fluidité (IF$_5$) sous 5 kg à 190°C: 1,6g/10 min,

- diamètre moyen en masse (Dm) : 150 μm,
- poudre constituée de particules de forme sphéroïdale, de distribution granulométrique étroite et de surface lisse.

*Exemple 20:*

*20.1. Préparation d'un prépolymère en suspension*

Dans un réacteur en acier inoxydable, ayant une capacité de 5 l et muni d'un système d'agitation tournant à 750 min$^{-1}$, on introduit, sous couverture d'azote, 25 mmol de TiBA, 9,25 mmol de paratoluate de méthyle et une quantité du catalyseur préparé à l'exemple 1 correspondant à 2,5 mmol de titane. On complète le volume de la suspension à 2 l avec du n-hexane. A température ambiante (20°C), on introduit dans le réacteur un volume de 30 ml d'hydrogène mesuré dans les conditions normales, puis le propylène suivant un débit de 200 g/h pendant 2½ h. Au bout de ce temps, on maintient la suspension de prépolymère sous agitation pendant encore ½ h. On dégaze le réacteur et, toujours sous couverture d'azote, on lave 3 fois la poudre de prépolymère avec du n-hexane. On transvase alors la suspension de prépolymère dans le n-hexane dans un évaporateur rotatif sous vide. On obtient 510 g d'une poudre sèche de prépolymère, constituée de particules sphéroïdiques, de distribution granulométrique étroite, de diamètre moyen en masse égal à 110 μm, de surface lisse et ayant une teneur en titane égale à 240 ppm. Cette poudre est conservée sous azote.

*20.2. Polymérisation en phase sèche (lit agité)*

25 g de la poudre sèche de prépolymère préparée à l'exemple 20.1, contenant 0,125 mmol de titane sont imprégnés par un mélange de 5 mmol d'une solution de TEA dans le n-hexane et de 1,65 mmol de paratoluate de méthyle. Cette poudre imprégnée est introduite dans un réacteur en acier inoxydable, ayant une capacité de 2 l et muni d'un système d'agitation pour poudre sèche. On y ajoute 100 g d'une poudre parfaitement sèche et anhydre de polypropylène. On maintient ce mélange de poudres sous agitation et sous balayage d'azote à 80°C, jusqu'à obtention d'une poudre apte à l'écoulement. Le réacteur est ensuite chauffé à 60°C. On y introduit du propylène jusqu'à obtention d'une pression de 1 MPa qui est maintenue constante pendant toute la durée de la polymérisation par ajout de propylène. En outre, un volume de 50 ml d'hydrogène mesuré dans les conditions normales est ajouté chaque heure dans le réacteur. Après 5 h de réaction, le réacteur est dégazé. On récupère 625 g d'une poudre sèche dont 500 g produits par la présente réaction de polymérisation du propylène présentent les caractétistiques suivantes:
- teneur en titane: 12 ppm,
- masse volumique apparente (MVA): 0,48 g/cm$^3$,
- teneur en polymère insoluble dans le n-heptane bouillant: 91% en poids,
- indice de fluidité (IF$_5$) sous 5 kg à 190°C: 1,1 g/10 min,
- diamètre moyen en masse (Dm): 250 μm,
- poudre constituée de particules de forme sphéroïdale, de distribution granulométrique étroite et de surface lisse.

*Exemple 21:*

*Polymérisation en phase sèche (lit fluidisé)*

Dans un réacteur à lit fluidisé, de 15 cm de diamètre, fonctionnant avec un gaz ascensionnel animé d'une vitesse de 15 cm/s et sous des pressions partielles de 0,1 MPa d'hydrogène et 1,5 MPa de propylène, on introduit de manière séquencée 16 g/h de la poudre sèche de prépolymère préparé à l'exemple 20.1. On y introduit en continu une solution dans le n-hexane d'un mélange de TnOA et de paratoluate de méthyle en rapport molaire 1/0,25, suivant un débit correspondant à 9 mmol de TnOA/h. La température du lit fluidisé est maintenue à 60°C pendant toute la polymérisation. Par soutirage séquencé, on obtient environ 500 g/h d'une poudre sèche de polypropylène directement utilisable qui présente les caractéristiques suivantes:
- teneur en titane: 8 ppm,
- masse volumique apparente (MVA): 0,45 g/cm$^3$,
- teneur en polymère insoluble dans le n-heptane bouillant: 90% en poids,
- indice de fluidité (IF$_5$) sous 5 kg à 190°C: 2,3 g/10 min,
- diamètre moyen en masse (Dm): 250 μm,
- poudre constituée de particules de forme sphéroïdale, de distribution granulométrique étroite et de surface lisse.

*Exemple 22:*

*Copolymérisation en phase sèche (lit fluidisé)*

On procède exactement comme à l'exemple 21, excepté le fait que le réacteur à lit fluidisé fonctionne sous des pressions partielles de 1,4 MPa de propylène et 0,1 MPa d'éthylène, au lieu de 1,5 MPa de propylène seul.

On obtient, par soutirage séquencé, environ 400 g/h d'une poudre sèche d'un copolymère du propylène et l'éthylène directement utilisable qui présente les caractéristiques suivantes:
- teneur en titane: 10 ppm,
- masse volumique apparente (MVA): 0,44 g/cm³,
- teneur en copolymère insoluble dans le n-heptane bouillant: 85% du poids,
- teneur en motifs dérivés de l'éthylène: 5% en poids (mesurée par spectrographie infrarouge),
- indice de fluidité ($IF_5$) sous 5 kg à 190°C: 3 g/10 min,
- diamètre moyen en masse (Dm) : 240 μm,
- poudre constituée de particules de forme sphéroïdale, de distribution granulométrique étroite et de surface lisse.

*Tableau 1*

| Exemple | Poids de polymère produit (g) | Durée de polymérisation (h) | Teneur en titane (ppm) | Rendement (kg de polymère par **mmole** de titane) | MVA (g/cm³) | IF₆ (g/10 min) | Diamètre moyen en masse (Dm) (μm) | Teneur en polymère insoluble dans le n-heptane bouillant (% en poids) |
|---|---|---|---|---|---|---|---|---|
| 6 | 480 | 2 ½ | 8 | 6 | 0,41 | 1,8 | 250 | 92 |
| 7 | 410 | 2 ½ | 12 | 4 | 0,38 | 1,3 | 250 | 90 |
| 8 | 395 | 2 ½ | 13 | 3,7 | 0,42 | 2,0 | 120 | 93 |
| 9 | 430 | 4 | 15 | 3,2 | 0,36 | 0,9 | 250 | 91 |
| 10 | 600 | 2 ½ | 10 | 4,8 | 0,36 | 1,3 | 260 | 80 |
| 11 | 500 | 3 | 9 | 5,3 | 0,42 | 1,5 | 250 | 92 |
| 12 | 450 | 3 | 12 | 4 | 0,42 | 1 | 250 | 93 |
| 13 | 450 | 2 ½ | 9 | 5,3 | 0,36 | ---- | 250 | 80 |
| 14 | 400 | 2 ½ | 12 | 4 | 0,40 | --- | 250 | 85 |
| 15 | 460 | 2 ½ | 8 | 6 | 0,43 | ---- | 200 | 92 |
| 16 | 500 | 2 ½ | 8 | 6 | 0,45 | ---- | 230 | 91 |

11

**Revendications**

1. Catalyseurs utilisables pour la polymérisation du propylène ou la copolymérisation du propylène avec d'autres alpha-oléfines, caractérisés en ce qu'ils comportent un support constitué d'un chlorure de magnésium et éventuellement d'un chlorure d'aluminium, dans un rapport atomique Cl/(Mg + 3/2·Al) sensiblement égal à 2,

   support ayant une surface spécifique comprise entre 20 et 60 m²/g (BET) et se présentant sous la forme de particules sphéroïdiques telles que le rapport du grand axe au petit axe de ces particules soit égal ou inférieur à 1,3 , ces particules ayant en outre un diamètre moyen en masse compris entre 10 et 100 μm et une distribution granulométrique telle que le rapport du diamètre moyen en masse, Dm, au diamètre moyen en nombre, Dn, est inférieur ou égal à 3,

   ce support pouvant être obtenu par une réaction de précipitation dans un milieu d'hydrocarbure liquide, à une température comprise entre 5 et 80°C, entre

   (i) un composé organomagnésien de formule $R_1MgR_2$ ou un complexe d'addition de formule $R_1MgR_2$, x $Al(R_3)_3$, formules dans lesquelles $R_1$, $R_2$, $R_3$ sont des radicaux alcoyle identiques ou différents ayant de 2 à 12 atomes de carbone et x est compris entre 0,01 et 2 , et

   (ii) un chlorure d'alcoyle de formule $R_4Cl$ dans laquelle $R_4$ est un radical alcoyle secondaire ou tertiaire ayant de 3 à 12 atomes de carbone,

   (iii) en présence d'un composé organique donneur d'électrons en faible proportion, choisi parmi les amines, les amides, les phosphines, les sulfoxydes, les sulfones et les éthers, dans des conditions telles que:
   - le rapport molaire $R_4Cl$ / $R_1MgR_2$ est compris entre 1,5 et 2,5 ,
   - le rapport molaire $R_4Cl$ / $R_1MgR_2$, x $Al(R_3)_3$ est compris entre 1,5 (1 + 3/2·x) et 2,5 (1 + 3/2·x), et
   - le rapport molaire entre le composé organique donneur d'électrons et $R_1MgR_2$ ou $R_1MgR_2$, x $Al(R_3)_3$ est compris entre 0,01 et 2 ,

   et caractérisés en ce que ce support est traité par un éther aromatique ou un ester d'un acide aromatique, est imprégné de tétrachlorure de titane, et comporte de 0,5 à 3 % d'atomes de titane par atome de magnésium.

2. Catalyseurs selon la revendication 1, caractérisés en ce que le support présente une distribution granulométrique telle que le rapport Dm/Dn du diamètre moyen en masse au diamètre moyen en nombre des particules est compris entre 1,1 et 2,5.

3. Catalyseurs selon la revendication 1, caractérisés en ce que le support présente une distribution granulométrique telle que le rapport Dm/Dn est compris entre 1,1 et 1,5.

4. Catalyseurs selon la revendication 1, caractérisés en ce que le support présente une distribution granulométrique telle que plus de 90 % en poids des particules d'un même lot sont compris dans la fourchette Dm ± 10 %.

5. Catalyseurs selon la revendication 1, caractérisés en ce que le support contient à titre de composé organique donneur d'électrons un éther de formule $R_5OR_6$, dans laquelle $R_5$ et $R_6$ sont des radicaux alcoyle identiques ou différents ayant de 1 à 12 atomes de carbone, ce support ne contenant pas de produit à liaison Mg-C, et en ce que sa densité est comprise entre 1,2 et 2,1.

6. Catalyseurs selon la revendication 1, caractérisés en ce que le support présente une surface lisse.

7. Procédé de préparation de catalyseurs définis dans la revendication 1, caractérisé en ce que ledit support est traité à une température comprise entre 20 et 50°C environ par l'éther aromatique ou l'ester d'un acide aromatique en quantité comprise entre 0,06 et 0,2 mole par mole de chlorure de magnésium du support et en ce que l'imprégnation dudit support par le tétrachlorure de titane est effectuée entre 80 et 100°C environ.

8. Procédé d'utilisation, pour la polymérisation du propylène ou la copolymérisation du propylène avec d'autres alpha-oléfines, des catalyseurs selon la revendication 1, caractérisé en ce que l'on réalise ladite polymérisation ou copolymérisation en présence d'un cocatalyseur de formule $Al(R_7)_3$ dans laquelle $R_7$ est un radical alcoyle, ayant de 2 à 12 atomes de carbone.

9. Procédé selon la revendication 8, caractérisé en ce que ledit cocatalyseur est utilisé à l'état compléxé par adjonction de 0,1 à 0,5 et, de préférence, 0,3 mole par mole de Al(R_7)_3 d'un composé donneur d'électrons, du type ester d'acide aromatique.

10. Procédé selon l'une des revendications 8 et 9, caractérisé en ce que l'on réalise une prépolymérisation du propylène éventuellement avec d'autres alpha-oléfines, de façon à ce que le prépolymère obtenu contienne de 0,1 à 500 g de polymère ou de copolymère par millimole de titane.

## Claims

1. Catalysts which can be used for the polymerisation of propylene or the copolymerisation of propylene with other $\alpha$-olefins,
**characterized** in that
they comprise a carrier consisting of magnesium chloride and optionally of an aluminium chloride in an atomic ratio Cl/(Mg+3/2 ·Al) approximately equal to 2,
the support having a specific surface area comprised between 20 and 60 $m^2/g$ (BET) and being present in the form of spheroidal particles such that the ratio of the large axis to the small axis of the particles is equal to or below 1.3, the particles further having a weight average diameter comprised between 10 and 100 $\mu m$ and such a granulometric distribution that the ratio of the weight average diameter, Dm, to the number average diameter, Dn, is below or equal to 3,
the support being obtainable by a precipitation reaction in a liquid hydrocarbon medium at a temperature comprised between 5 and 80 C° between
(i) an organomagnesium compound of the formula $R_1MgR_2$ or an addition complex of the formula $R_1MgR_2$ x Al $(R_3)_3$, wherein $R_1$, $R_2$, $R_3$, which can be the same or different, are alkyl groups having 2 to 12 carbon atoms, and x is comprised between 0.01 and 2, and
(ii) an alkyl chloride of the formula $R_4Cl$, wherein $R_4$ is a secondary or tertiary alkyl group having 3 to 12 carbon atoms,
(iii) in the presence of anorganic electron donor compound in a small amount selected from amines, amides, phosphins, sulfoxydes, sulfones and ethers, under such conditions that
- the molar ratio $R_4Cl / R_1MgR_2$ is comprised between 1.5 and 2.5,
- the molar ratio $R_4Cl / R_1MgR_2$ x Al$(R_3)_3$ is comprised between $1,5 (1 + 3/2 \cdot x)$ and $2,5 (1 + 3/2 \cdot x)$, and
- the molar ratio between the organic electron donor compound and $R_1MgR_2$ or $R_1MgR_2$ x A1$(R_3)_3$ is comprised between 0.01 and 2, and
the carrier is treated with an aromatic ether or an ester of an aromatic acid and is impregnated with titanium tetrachloride, and comprises 0.5 to 3 % of titan atoms per magnesium atom.

2. Catalysts according to claim 1, characterized in that the carrier has such a granulometric distribution that the ratio Dm/Dn of the mass average diameter to the number average diameter of the particles is comprised between 1.1 and 2.5.

3. Catalysts according to claim 1, characterized in that the carrier has such a granulometric distribution that the ratio Dm/Dn is comprised between 1.1 and 1.5.

4. Catalysts according to claim 1, characterized in that the carrier has such a granulometric distribution that more than 90 mass-% of the particles of one and the same lot are comprised within the range of Dm ± 10 %.

5. Catalysts according to claim 1, characterized in that the carrier comprises as the organic electron donor compound an ether of the formula $R_5OR_6$, wherein $R_5$ and $R_6$, which are same or different, are alkyl groups having 1 to 12 carbon atoms, and the carrier does not contain products having an Mg-C bond, and in that the density is comprised between 1.2 and 2.1.

6. Catalysts according to claim 1, characterized in that the carrier has a smooth surface.

7. Process for the preparation of catalysts as defined in claim 1, characterized in that the carrier is treated at a temperature comprised between approximate 20 and 50 °C with an aromatic ether or an ester of an aromatic acid in an amount comprised between 0.06 and 0.2 mole per mole of magnesium chloride of the carrier, and in that the impregnation of the carrier with the titanium tetrachloride is effected at a temperature comprised between approximately 80 and 100 °C.

8. Process of utilizing the catalysts according to claim 1 for the polymerisation of propylene or the copolymerisation of propylene with other $\alpha$-olefins, characterized in that the polymerisation or copolymerisation is effected in the presence of a cocatalyst of the formula $Al(R_7)_3$ wherein $R_7$ is an alkyl group having 2 to 12 carbon atoms.

9. Process according to claim 8, characterized in that the cocatalyst is used in a complexed state, complexed by the addition of 0.1 to 0.5 and preferably 0.3 mole of an electron donor compound of aromatic ester type per mole of $Al(R_7)_3$.

10. Process according to one of claims 8 and 9, characterized in that a prepolymerisation of propylene, optionally with other $\alpha$-olefins, is effected such that the prepolymer obtained contains 0.1 to 500 g of polymer or copolymer per millimole of titanium.


**Patentansprüche**

1. Katalysatoren, die zur Polymerisation von Propylen oder zur Copolymerisation von Propylen mit anderen $\alpha$-Olefinen verwendbar sind,
**dadurch gekennzeichnet,**
daß sie einen Träger aufweisen, der aus einem Magnesiumchlorid und gegebenenfalls aus einem Aluminiumchlorid besteht, wobei das Atomverhältnis Cl/(Mg+ 3/2 Al) etwa gleich 2 ist,
der Träger eine spezifische Oberfläche zwischen 20 und 60 m²/g (BET) besitzt und in Form von sphäroidalen Teilchen vorliegt, wobei das Verhältnis der großen Achse zur kleinen Achse dieser Teilchen gleich oder kleiner als 1,3 ist, diese Teilchen ferner ein Massenmittel des Durchmessers zwischen 10 und 100 µm und eine solche Korngrößenverteilung besitzen, daß das Verhältnis des Massenmittels des Durchmessers, Dm, zum Zahlenmittel des Durchmessers, Dn, gleich oder kleiner als 3 ist,
wobei dieser Träger durch eine Fällungsreaktion in einem flüssigen Kohlenwasserstoff bei einer Temperatur zwischen 5 und 80 C° zwischen
(i) einer Organomagnesiumverbindung der Formel $R_1MgR_2$ oder einem Additionskomplex der Formel $R_1MgR_2 \times Al(R_3)_3$, worin $R_1$, $R_2$ und $R_3$ gleiche oder verschiedene Alkylreste mit 2 bis 12 Kohlenstoffatomen sind und x zwischen 0,01 und 2 liegt, und
(ii) einem Alkylchlorid der Formel $R_4Cl$, worin $R_4$ einen sekundären oder tertiären Alkylrest mit 3 bis 12 Kohlenstoffatomen bedeutet,
(iii) in Gegenwart einer keinen Menge einer organischen Elektronendonorverbindung, die unter Aminen, Amiden, Phosphinen, Sulfoxiden, Sulfonen und Ethern ausgewählt ist, unter solchen Bedingungen erhältlich ist, daß:
- das Molarverhältnis $R_4Cl/R_1MgR_2$ zwischen 1,5 und 2,5 liegt,
- das Molarverhältnis $R_4Cl/R_1MgR_2 \times Al(R_3)_3$ zwischen 1,5 (1 + 3/2 x) und 2,5 (1 + 3/2 x) liegt und
- das Molarverhältnis zwischen der organischen Elektronendonorverbindung und $R_1MgR_2$ oder $R_1MgR_2 \times Al(R_3)_3$ zwischen 0,01 und 2 liegt, und
der Träger mit einem aromatischen Ether oder einem Ester einer aromatischen Säure behandelt und mit Titantetrachlorid imprägniert ist und 0,5 bis 3 % Titanatome pro Magnesiumatom enthält.

2. Katalysatoren nach Anspruch 1, dadurch gekennzeichnet, daß der Träger eine solche Teilchengrößenverteilung aufweist, daß das Verhältnis Dm/Dn des Massenmittels zum Zahlenmittel des Durchmessers der Teilchen zwischen 1,1 und 2,5 liegt.

3. Katalysatoren nach Anspruch 1, dadurch gekennzeichnet, daß der Träger eine solche Teilchengrößenverteilung aufweist, daß das Verhältnis Dm/Dn zwischen 1,1 und 1,5 liegt.

4. Katalysatoren nach Anspruch 1, dadurch gekennzeichnet, daß der Träger eine solche Teilchengrößenverteilung aufweist, daß mehr als 90 Masse-% der Teilchen einer Charge im Bereich Dm ± 10 % liegen.

5. Katalysatoren nach Anspruch 1, dadurch gekennzeichnet, daß der Träger als organische Elektronendonorverbindung einen Ether der Formel $R_5OR_6$ aufweist, worin $R_5$ und $R_6$ gleiche oder verschiedene Alkylreste mit 1 bis 12 Kohlenstoffatomen sind, der Träger keine Produkte mit einer Mg-C-Bindung enthält und seine Dichte zwischen 1,2 und 2,1 liegt.

6. Katalysatoren nach Anspruch 1, dadurch gekennzeichnet, daß der Träger eine glatte Oberfläche aufweist.

7. Verfahren zur Herstellung von Katalysatoren nach der Definition von Anspruch 1, dadurch gekennzeichnet, daß der Träger bei einer Temperatur zwischen ungefähr 20 und 50 °C mit dem aromatischen Ether oder dem Ester einer aromatischen Säure in einer Menge von 0,06 bis 0,2 mol pro mol Magnesiumchlorid des Trägers behandelt wird und die Imprägnierung des Trägers mit Titantetrachlorid bei ungefähr 80 bis 100 °C durchgeführt wird.

8. Verfahren der Verwendung der Katalysatoren nach Anspruch 1, zur Polymerisation von Propylen oder zur Copolymerisation von Propylen mit anderen $\alpha$-Olefinen, dadurch gekennzeichnet, daß man die Polymerisation oder Copolymerisation in Gegenwart eines Cokatalysators der Formel $Al(R_7)_3$ durchführt, worin $R_7$ ein Alkylrest mit 2 bis 12 Kohlenstoffatomen ist.

9. Verfahren nach Anspruch 8, dadurch gekennzeichnet, daß der Cokatalysator in einem durch Zugabe von 0,1 bis 0,5 und vorzugsweise 0,3 mol einer Elektronendonorverbindung auf der Basis eines Esters einer aromatischen Säure pro Mol Al $(R_7)_3$ komplexierten Zustand verwendet wird.

10. Verfahren nach einem der Ansprüche 8 und 9, dadurch gekennzeichnet, daß man eine Präpolymerisation von Propylen gegebenenfalls mit anderen $\alpha$-Olefinen, dergestalt durchführt, daß das erhaltene Präpolymer 0,1 bis 500 g Polymer oder Copolymer pro mmol Titan enthält.